# EUROPÄISCHE PATENTSCHRIFT

(11) **EP 2 933 901 B1**
(45) Veröffentlichungstag und Bekanntmachung des Hinweises auf die Patenterteilung: **26.10.2016**
(21) Anmeldenummer: 14164702.4
(22) Anmeldetag: 15.04.2014
(51) Int. Cl.: H02K 3/34, H02K 15/10, H02K 15/04, H02K 15/06, H02K 3/487, H02K 3/493

(54) **Stator einer elektrischen Maschine und dessen Herstellung**
Stator of an electric machine and production thereof
Stator d'une machine électrique et sa fabrication

(43) Veröffentlichungstag der Anmeldung: 21.10.2015
(73) Patentinhaber: Siemens Aktiengesellschaft, 80333 München (DE)
(72) Erfinder: Scherer, Matthias, 90459 Nürnberg (DE); Deeg, Christian, 90518 Altdorf (DE); Eichinger, Benjamin, 90459 Nürnberg (DE); Joseph, Eric, 90489 Nürnberg (DE); Scharf, Uwe, 90763 Fürth (DE); Stegherr, Michael, 90491 Nürnberg (DE); Weiß, Sebastian, 90522 Oberasbach (DE)

(56) Entgegenhaltungen:
- EP-A1- 2 621 062
- EP-A2- 2 573 908
- CN-A- 103 701 266
- DE-A1-102008 055 594
- DE-A1-102009 037 581
- JP-A- S61 177 143
- US-A1- 2012 194 028
- US-B1- 6 353 198

## Beschreibung

Die Erfindung betrifft einen Stator einer rotierenden elektrischen Maschine und ein Verfahren zur automatisierten Herstellung einer Wicklung eines Stators einer rotierenden elektrischen Maschine.

Rotierende elektrische Maschinen, insbesondere Hochspannungs-Asynchronmaschinen, bestehen in der Regel aus einem Blechpaket mit eingestanzten Nuten und einer darin eingelegten, so genannten verteilten Wicklung. Diese Wicklung ist aus Einzelspulen aufgebaut, die eine relativ komplexe dreidimensionale Geometrie aufweisen. Die Herstellung einer derartigen Spulengeometrie ist aufwändig und zeitintensiv. Insbesondere müssen enge Radien im Bereich des Wickelkopfes oft von Hand isoliert werden, da Wicklungsmaschinen für derartige Bereiche im Vergleich wesentlich länger bräuchten und langwierig eingerichtet werden müssten. Nötig ist dies aufgrund der erforderlichen hohen Varianz an spezifischen Kundenlösungen. Daraus resultiert, dass oft faktisch jeweils nur ein Spulensatz gleicher Bauart hergestellt wird.

Der Erfindung liegt die Aufgabe zugrunde, einen verbesserten Stator einer rotierenden elektrischen Maschine und ein verbessertes Verfahren zur Herstellung einer Wicklung eines Stators einer rotierenden elektrischen Maschine anzugeben.

EP 2 573 908 A2 offenbart eine elektrische Maschine mit einem Stator, der eine Wicklung aufweist, die zumindest entlang eines Teils ihrer Länge von einem keramischen Material umgeben ist.

US 2012/0194028 A1 offenbart eine Isolierungsanordnung für eine Statoranordnung und ein Verfahren zum Anordnen einer Isolierungsanordnung für eine Statoranordnung.

EP 2 621 062 A1 offenbart eine Verbindungsvorrichtung für ein Statorsegment für einen Stator einer elektrischen Maschine, um Endabschnitte zweier einander zugeordneter Teile einer Wicklung elektrisch miteinander zu verbinden.

CN 103 701 266 A offenbart ein Verfahren zur Herstellung eines magnetischen Nutenkeils.

Die Aufgabe wird erfindungsgemäß hinsichtlich des Verfahrens durch die Merkmale des Anspruchs 1 und hinsichtlich des Stators durch die Merkmale des Anspruchs 11 gelöst.

Vorteilhafte Ausgestaltungen der Erfindung sind Gegenstand der Unteransprüche.

Ein erfindungsgemäßer Stator einer rotierenden elektrischen Maschine umfasst ein Blechpaket mit mehreren zu einem Luftspalt zwischen dem Stator und einem Rotor der elektrischen Maschine offenen Nuten und eine Wicklung mit mehreren Spulen, deren Windungen jeweils durch Nuten des Blechpaketes verlaufen. Dabei sind die Windungen der Spulen innerhalb der Nuten durch ein keramisches Material voneinander und zum Blechpaket elektrisch isoliert.

Die elektrische Isolation der Windungen der Spulen innerhalb der Nuten durch ein keramisches Material hat den Vorteil, dass keramisches Material ein besonders gut elektrisch isolierend ist, so dass die Isolationsschichten zwischen den Windungen besonders dünn gestaltet werden können. Ferner verbessern derartig dünne Isolationsschichten auch die Wärmeableitung aus den Nuten. Zudem ist die Hitzebeständigkeit von Keramik wesentlich größer als die Hitzebeständigkeit herkömmlicher Bänderisolation.

Eine Ausgestaltung des Stators sieht vor, dass jede Nut luftspaltseitig mit einem Profilstab verschlossen ist.

Dadurch können die Windungen der Spulen innerhalb der Nuten vorteilhaft in der Nut gehalten und fixiert werden.

Ein erfindungsgemäßer Profilstab zum luftspaltseitigen Verschließen einer Nut in einem Blechpaket eines erfindungsgemäßen Stators besteht aus einem Grundkörper aus Glasfaser mit einem Überzug aus einem magnetisch leitfähigen und elektrisch isolierenden Material.

Ein derartiger Profilstab eignet sich vorteilhaft nicht nur zum Fixieren der Windungen von Spulen in einer Nut, sondern auch zur Führung des magnetischen Flusses und damit einer Magnetfeldhomogenisierung im Luftspalt zwischen dem Stator und dem Rotor der elektrischen Maschine aufgrund der magnetischen Leitfähigkeit des Überzuges des Grundkörpers und der Tatsache, dass sich Glasfaser in seinen magnetischen Eigenschaften ähnlich wie Luft verhält und damit bei geeigneter geometrischer Gestaltung des Grundkörpers einen ausreichend großen magnetischen Widerstand im Öffnungsbereich der Nut bewirken kann, um Streufelder zu minimieren.

Eine Ausgestaltung des Profilstabes sieht vor, dass der Überzug aus einem so genannten Soft Magnetic Composite (SMC) besteht.

SMC eignet sich aufgrund seiner hohen magnetischen Permeabilität bei gleichzeitig hoher elektrisch isolierender Wirkung besonders vorteilhaft als Material für den Überzug des Profilstabes zur Magnetfeldhomogenisierung im Luftspalt zwischen dem Stator und dem Rotor.

Eine weitere Ausgestaltung des Profilstabes sieht vor, dass der Grundkörper die Form eines geraden Prismas mit einer dreieckigen Grundfläche hat, von dem an zwei zu der Grundfläche orthogonalen Kanten je ein Flansch absteht, so dass der Grundkörper einen T-förmigen Querschnitt mit von den Flanschen gebildeten Armen und einem dreieckigen Fuß aufweist. Die Gestaltung des Grundkörpers mit einem T-förmigen Querschnitt, der einen dreieckigen Fuß aufweist hat zum Einen den Vorteil, dass der Balken des T zur Verankerung in Aussparungen in den Seitenwänden einer Nut und somit der stabilen Verankerung des Profilstabes in der Nut dienen kann (vgl. Ausführungsbeispiele unten). Zum Anderen bewirkt der dreieckige Fuß bei dessen Orientierung zum Luftspalt zwischen dem Stator und dem Rotor eine luftspaltseitige Verjüngung des Grundkörpers, die magnetische Streuverluste reduziert und somit vorteilhaft zur Magnetfeldhomogenisierung im Luftspalt beiträgt.

Eine weitere Ausgestaltung des Profilstabes sieht vor, dass der Überzug die Form zweier Seitenkörper hat, die jeweils einen rautenförmigen Querschnitt haben und an einer Flanschoberfläche eines Flansches und einer sich daran anschließenden Prismaseitenfläche des Grundkörpers anliegen.

Diese Ausformung des Überzugs reduziert ebenfalls vorteilhaft magnetische Streuverluste und trägt somit vorteilhaft zur Magnetfeldhomogenisierung im Luftspalt bei.

Bei dem erfindungsgemäßen Verfahren wird eine Wicklung eines Stators einer rotierenden elektrischen Maschine automatisiert hergestellt, wobei die Wicklung aus mehreren Spulen besteht und der Stator ein Blechpaket mit Nuten aufweist, durch die Windungen der Spulen der Wicklung verlaufen. Dabei werden mehrere Leiterbündel gerader, zueinander paralleler und elektrisch voneinander isolierter Leiter, die jeweils länger als eine Nut sind, hergestellt. Jedes Leiterbündel wird in eine Nut des Stators eingebracht, so dass beide Leiterenden jedes Leiters aus der Nut herausragen. Die Leiterenden der Leiter an beiden axialen Blechpaketenden des Blechpaketes werden durch jeweils einen Wickelkopf zu Spulen der Wicklung elektrisch verbunden.

Die Kernidee des erfindungsgemäßen Verfahrens besteht darin, die Wicklung oder deren Spulen nicht in einem Stück herzustellen, sondern in Einzelschritten zu fertigen, in denen jeweils nur Segmente der Wicklung und Spulen hergestellt werden, die sich automatisiert fertigen, positionieren und anschließend miteinander verbinden lassen. Insbesondere nutzt das Verfahren vorteilhaft aus, dass sich Leiterbündel gerader Leiter automatisiert herstellen, in Nuten einbringen und durch Wickelköpfe miteinander verbinden lassen.

Das Verfahren sieht ferner vor, dass die Leiter eines Leiterbündels in dem gesamten Bereich, der in eine Nut eingebracht wird, mit einem keramischen Material voneinander elektrisch isoliert werden.

Die Vorteile der Verwendung keramischen Materials zur Isolierung der Leiter wurden oben bereits genannt. Keramisches Material kann bei dem Verfahren zur automatisierten Isolierung der Leiter innerhalb der Nuten verwendet werden, da die geraden Leiter der Leiterbündel in den Nuten nicht verformt, sondern nur außerhalb der Nuten miteinander durch Wickelköpfe verbunden werden.

Eine erste Variante des Verfahrens sieht vor, dass zur Herstellung eines Leiterbündels für jeden Leiter ein Isolationshohlkörper hergestellt und zur Erzeugung der Leiter mit einem elektrisch leitfähigen Material homogen und ohne Lufteinschlüsse ausgegossen wird.

Eine ähnliche, alternative Variante des Verfahrens sieht vor, dass zur Herstellung eines Leiterbündels ein Isolationshohlkörperblock mit Durchlöchern für die Leiter hergestellt und mit einem elektrisch leitfähigen Material homogen und ohne Lufteinschlüsse ausgegossen wird.

Diese Varianten sehen also jeweils vor, zunächst die elektrischen Isolierungen der Leiter in den Nuten zu fertigen und die Leiter danach darin einzugießen. Auch diese Ausgestaltungen lassen sich vorteilhaft automatisiert durchführen.

Eine weitere, zu den beiden vorgenannten Varianten alternative Variante des Verfahrens sieht vor, dass zur Herstellung eines Leiterbündels Leiterstäbe, die länger als eine Nut sind, herstellt werden, voneinander beabstandet in eine Füllform, die dieselbe Länge wie eine Nut hat, eingebracht werden, so dass die Leiterenden der Leiterstäbe beidseitig aus der Füllform herausragen, und die Füllform zur elektrischen Isolierung der Leiterstäbe mit einem elektrisch isolierenden Isolationsmaterial befüllt und nach dem Aushärten des Isolationsmaterials entfernt wird.

Diese Variante sieht also vor, zunächst die in die Nuten einzubringenden Leiter zu fertigen und danach die Isolation um diese herum zu gießen. Auch diese Variante lässt sich vorteilhaft automatisiert durchführen.

Eine vorteilhafte Ausgestaltung des Verfahrens sieht vor, dass jede Nut luftspaltseitig mit einem Profilstab verschlossen wird.

Die Verwendung von Profilstäben zum Verschließen von Nuten hat die oben bereits genannten Vorteile, insbesondere wenn erfindungsgemäße, oben beschriebene Profilstäbe verwendet werden. Auch diese Ausgestaltung lässt sich vorteilhaft automatisiert durchführen.

Eine weitere Ausgestaltung des Verfahrens sieht vor, dass zur Herstellung eines Wickelkopfes jeweils zwei Leiterenden mit einem Verbindungsleiter verlötet werden. Dabei wird vorzugsweise jeder Verbindungsleiter mit zwei Leiterenden vor dem Verlöten über eine Steckverbindung verbunden.

Diese Ausgestaltungen ermöglichen das automatisierte Verbinden von Leiterenden durch Verlöten mit vorgefertigten Verbindungsleitern. Steckverbindungen sind dabei vorteilhaft, da sie die Positionierung der Verbindungsleiter vereinfachen und Fertigungstoleranzen ausgleichen können.

Eine zu der vorgenannten Ausgestaltung alternative Ausgestaltung des Verfahrens sieht vor, dass zur Herstellung eines Wickelkopfes jeweils zwei aus verschiedenen Nuten herausragende Leiterenden zueinander gebogen und danach elektrisch miteinander verbunden werden.

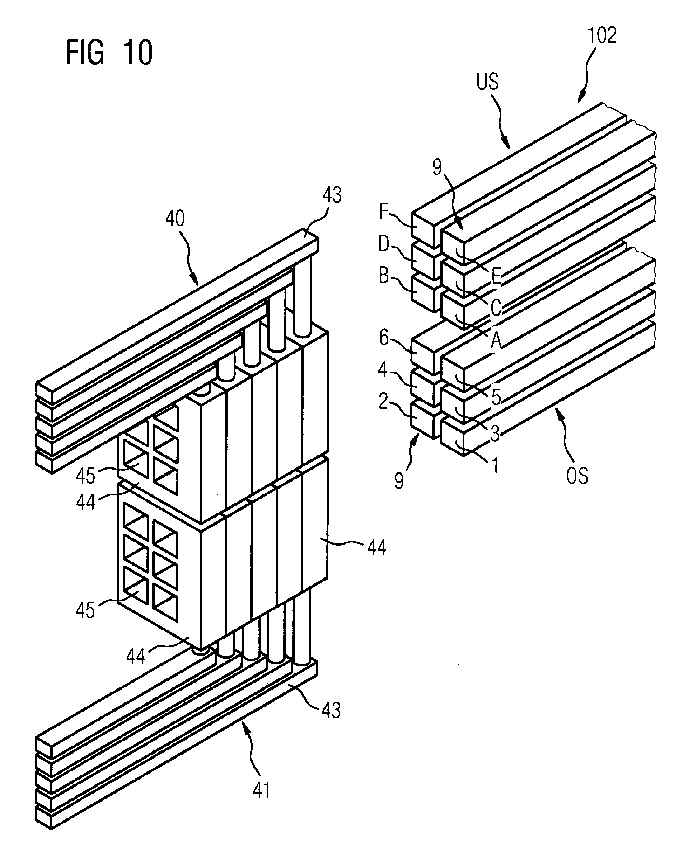

Bei dieser Ausgestaltung werden also keine vorgefertigten Verbindungsleiter benötigt. Diese Ausgestaltung lässt sich mittels einer dazu geeigneten Robotik vorteilhaft automatisiert durchführen, vgl. die Ausführungsbeispiele unten (insbesondere die Beschreibung der Figuren 10 bis 18).

Eine weitere Ausgestaltung des Verfahrens sieht vor, dass die Wicklung im Bereich des Wickelkopfes mit einem Isolationsmaterial vergossen wird.

Vergießen mit Isolationsmaterial ermöglicht vorteilhaft eine relativ einfache automatisierte Isolierung des Wickelkopfes.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine perspektivische Darstellung von Isolationshohlkörpern,
- FIG 2: einen Querschnitt eines Stators im Bereich einer Nut,
- FIG 3: eine perspektivische Darstellung eines Stators im Bereich einer Nut,
- FIG 4: eine perspektivische Darstellung eines Stators im Bereich einer Nut und einen Elektroblechstab,
- FIG 5: eine perspektivische Darstellung eines Profilstabes,
- FIG 6: eine perspektivische Darstellung eines Verbindungsleiters eines Wickelkopfes und eines Leiterendes,
- FIG 7: eine perspektivische Darstellung von in einer Füllform eingelegten Leiterstäben,
- FIG 8: eine perspektivische Darstellung von in einer Füllform eingelegten Leiterstäben und eine Abdichtung der Füllform,
- FIG 9: eine perspektivische Darstellung eines Leiterbündels,
- FIG 10: eine ausschnittsweise perspektivische Darstellung einer Vorrichtung zum Verbiegen von Leiterenden,
- FIG 11: eine schematische Darstellung einer Vorrichtung zum Verbiegen und Verlöten von Leiterenden,
- FIG 12: schematisch eine Verlöteinheit,
- FIG 13: eine perspektivische Darstellung einer Wicklung im Bereich eines ersten Wickelkopfes auf einer NichtSchaltseite der Wicklung,
- FIG 14: ein Verdrillungsschema für eine Oberschicht von Leitern,
- FIG 15: schematisch ein Verdrillen zweier Leiterenden,
- FIG 16: eine perspektivische Darstellung verdrillter Leiterenden einer Oberschicht von Leitern,
- FIG 17: eine perspektivische Darstellung verdrillter Leiterenden einer Oberschicht und eine Unterschicht von Leitern,
- FIG 18: eine perspektivische Darstellung einer Wicklung im Bereich eines ersten Wickelkopfes auf einer Schaltseite der Wicklung,
- FIG 19: schematisch ein Verbinden von Leiterenden zu Wickelköpfen,
- FIG 20: eine perspektivische Darstellung einer Vergießeinheit zum automatisierten Isolieren eines Wickelkopfes, und
- FIG 21: eine perspektivische Darstellung einer Maschinenstraße zur vollständig automatisierten Herstellung einer Wicklung eines Stators.

Einander entsprechende Teile sind in allen Figuren mit den gleichen Bezugszeichen versehen.

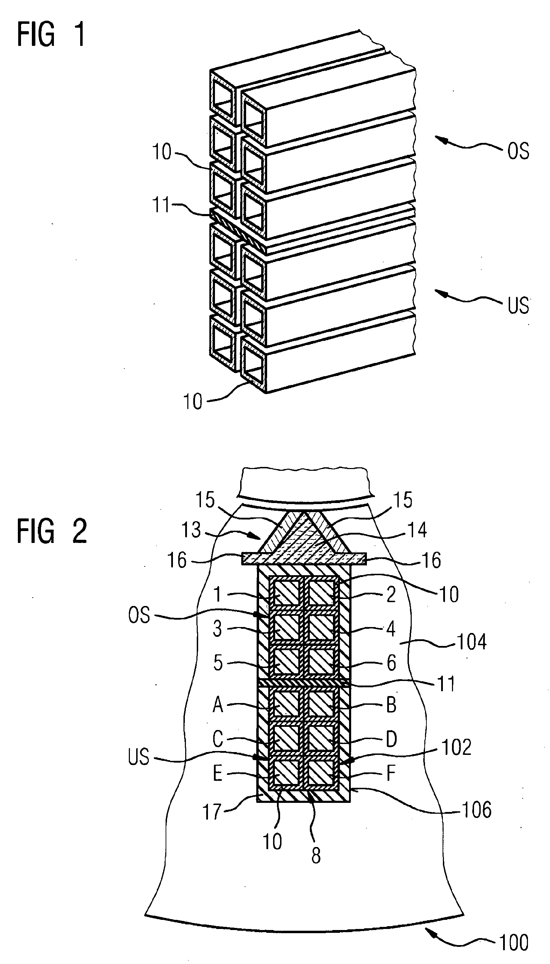

Die Figuren 1 bis 6 zeigen ein erstes Ausführungsbeispiel eines Stators 100 einer rotierenden elektrischen Maschine und ein Verfahren zu einer automatisierten Herstellung einer Wicklung 102 des Stators 100. Der Stator 100 weist ein Blechpaket 104 mit mehreren zu einem Luftspalt zwischen dem Stator 100 und einem Rotor der elektrischen Maschine offenen Nuten 106 auf. Die Wicklung 102 besteht aus Spulen, deren Windungen jeweils durch Nuten 106 des Blechpaketes 104 verlaufen.

Zur Herstellung der Wicklung 102 werden in einer Variante dieses Ausführungsbeispiels zunächst mehrere in Figur 1 dargestellte gerade rohrartige Isolationshohlkörper 10 aus einem elektrisch isolierenden Isolationsmaterial, bevorzugt aus einem keramischen Material, hergestellt. Jeder dieser Isolationshohlkörper 10 hat wenigstens die Länge einer Nut 106 und einen Querschnitt mit einer rechteckigen Außenkontur. Die Isolationshohlkörper 10 werden automatisiert zu Isolationshohlkörperstapeln gestapelt, die jeweils in eine Nut 106 eingebracht werden können.

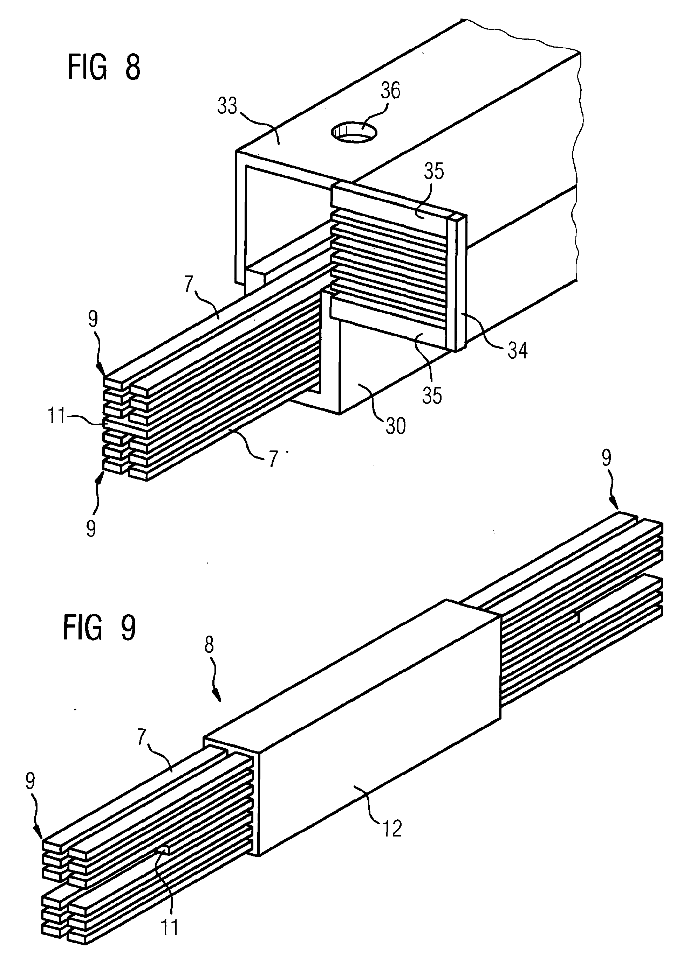

Die Isolationshohlkörperstapel werden anschließend automatisiert mit einem elektrisch leitfähigen Material homogen und ohne Lufteinschlüsse ausgegossen, bevorzugt mit Aluminium beispielsweise in einem Aluminium-Druckgussverfahren oder mit Kupfer beispielsweise in einem Kupfer-Vakuum-Fließgussverfahren. Dabei werden Zusatzgussformen verwendet, die die Isolationshohlkörperstapel an ihren Enden verlängern und nach dem Gießen entfernt werden, so dass aus jedem Isolationshohlkörperstapel ein Leiterbündel 8 von isolierten geraden Leitern 1 bis 6, A bis F entsteht, die jeweils durch einen Isolationshohlkörper 10 verlaufen und deren Leiterenden 9 analog zu Figur 9 aus dem Isolationshohlkörperstapel herausgeführt sind. Zwischen zwei Schichten von Isolationshohlkörpern 10 eines Leiterbündels 8 wird bedarfsweise eine Trennschicht 11 angeordnet, um Leiter 1 bis 6, A bis F einer so genannten Unterschicht US und einer so genannten Oberschicht OS einer Nut 106 voneinander zu trennen, vgl. Figuren 2 bis 4. Zusätzlich oder alternativ zu der Trennschicht 11 kann auch ein Kühlkanal zwischen zwei Schichten von Isolationshohlkörpern 10 eines Leiterbündels 8 angeordnet werden.

In einer alternativen Variante des Ausführungsbeispiels werden statt einzelner Isolationshohlkörper 10 Isolationshohlkörperblöcke 12 (vgl. Figur 9) hergestellt, die jeweils einem Isolationshohlkörperstapel entsprechen, mehrere in einer Längsrichtung verlaufende Durchlöcher aufweisen, und automatisiert mit einem elektrisch leitfähigen Material homogen und ohne Lufteinschlüsse ausgegossen werden, ebenfalls bevorzugt mit Aluminium beispielsweise in einem Aluminium-Druckgussverfahren oder mit Kupfer beispielsweise in einem Kupfer-Vakuum-Fließgussverfahren. Auch dabei werden Zusatzgussformen verwendet, die die Isolationshohlkörperblöcke 12 an ihren Enden verlängern und nach dem Gießen entfernt werden, so dass aus jedem Isolationshohlkörperblock 12 ein Leiterbündel 8 von geraden Leitern 1 bis 6, A bis F entsteht, die jeweils durch ein Durchloch des Isolationshohlkörperblocks 12 verlaufen und deren Leiterenden 9 aus dem Isolationshohlkörperblock 12 herausgeführt sind.

Die Leiterbündel 8 werden automatisiert in die Nuten 106 eingebracht.

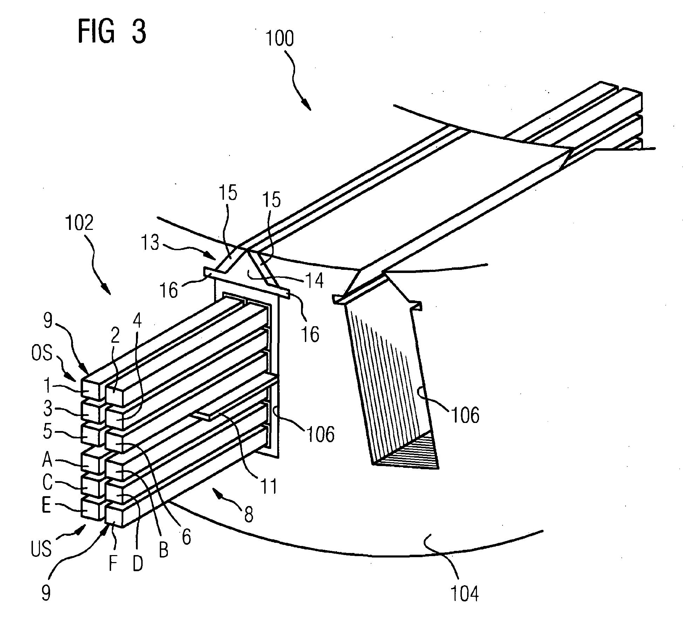

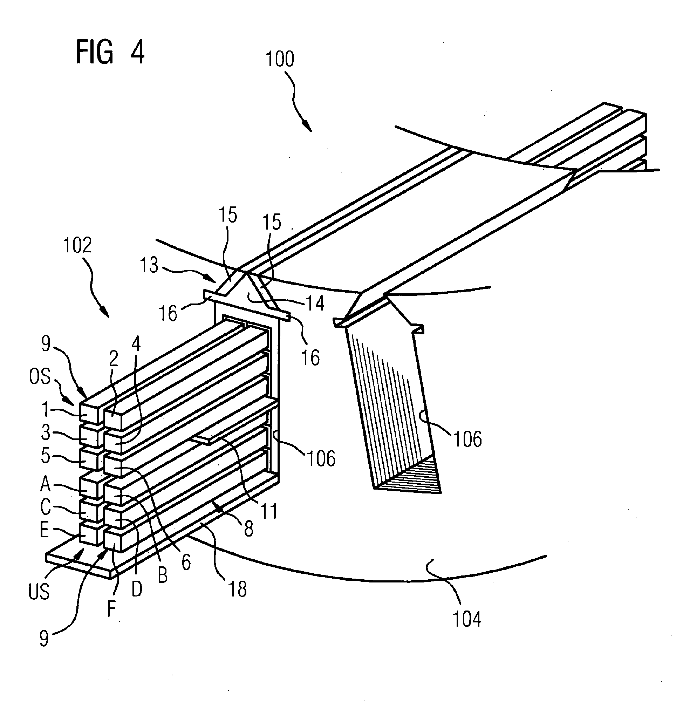

Die Figuren 2 bis 4 zeigen den Stator 100 im Bereich einer Nut 106, in die ein Leiterbündel 8 eingebracht ist. Dabei zeigt Figur 2 einen Querschnitt des Stators 100 im Bereich der Nut 106 und die Figuren 3 und 4 zeigen jeweils eine perspektivische Darstellung des Stators 100 im Bereich der Nut 106 mit einer weiteren Nut 106, in die noch kein Leiterbündel 8 eingebracht ist. Das Leiterbündel 8 weist eine Trennschicht 11 auf, die Leiter A bis F einer nutgrundseitigen Unterschicht US von Leitern 1 bis 6 einer luftspaltseitigen Oberschicht OS der Leiter 1 bis 6, A bis F in der Nut 106 trennt.

Die Figuren 2 bis 4 zeigen auch einen Profilstab 13, mit dem eine Nut 106 luftspaltseitig verschlossen wird. Der Profilstab 13 besteht aus einem Grundkörper 14 aus Glasfaser mit einem Überzug aus einem magnetisch leitfähigen und elektrisch isolierenden Material, das bevorzugt ein so genanntes Soft Magnetic Composite (SMC) ist. Der Überzug hat in dem dargestellten Ausführungsbeispiel die Form zweier an dem Grundkörper 14 anliegender Seitenkörper 15. Der Grundkörper 14 hat die Form eines geraden Prismas mit einer zu einer Längsachse der Nut 106 orthogonalen dreieckigen Grundfläche, von dem an zwei entlang der Nut 106 verlaufenden Kanten je ein Flansch 16 absteht, so dass der Grundkörper 14 einen T-förmigen Querschnitt mit von den Flanschen 16 gebildeten Armen und einem dreieckigen Fuß aufweist. Die flanschlose dritte entlang der Nut 106 verlaufende Kante des Grundkörpers 14 ist dem Luftspalt zugewandt. Die Seiten-körper 15 haben jeweils einen rautenförmigen Querschnitt und liegen jeweils an einer dem Luftspalt zugewandten Flanschoberfläche eines Flansches 16 und der sich daran anschließenden Prismaseitenfläche des Grundkörpers 14 an.

Die Nut 106 hat in einem luftspaltseitigen Öffnungsbereich einen zu dem Querschnitt des Profilstabes 13 korrespondierenden Querschnitt, so dass der Profilstab 13 in den Öffnungsbereich passgenau einschiebbar ist. Zwischen dem Öffnungsbereich und dem Nutgrund hat die Nut 106 einen rechteckigen Querschnitt. Der Öffnungsbereich der Nut 106 ist im Bereich der Flansche 16 des Profilstabes 13 breiter als der Bereich mit dem rechteckigen Querschnitt und verengt sich zu dem Luftspalt hin, bzw. der Abstand zwischen den Enden der beiden Flansche 16 ist größer als die Breite des Bereiches der Nut 106 mit dem rechteckigen Querschnitt und die Breite des Profilstabes 13 verringert sich zu dem Luftspalt hin, so dass der Profilstab 13 nicht aus der Nut 106 herausgedrückt werden kann und die Leiterbündel 8 in der Nut 106 hält und fixiert.

Neben der Fixierung der Leiterbündel 8 in der Nut 106 dient der Profilstab 13 vorteilhaft der Führung des magnetischen Flusses und damit einer Magnetfeldhomogenisierung im Luftspalt durch das Material der Seitenkörper 15 und die Form des Grundkörpers 14 und der Seitenkörper 15. SMC eignet sich beispielsweise besonders gut als Material der Seitenkörper 15 aufgrund seiner hohen magnetischen Permeabilität. Die Form des Grundkörpers 14 und der Seitenkörper 15 wird derart gewählt, dass magnetische Streuverluste gering bleiben. Erreicht wird dies über den sich zum Luftspalt hin verjüngenden Grundkörper 14, der sich in seinen magnetischen Eigenschaften ähnlich wie Luft verhält und damit einen ausreichend großen magnetischen Widerstand im Öffnungsbereich der Nut 106 bewirkt, um Streufelder zu minimieren.

Wenn die Leiterbündel 8 nicht passgenau für die Nuten 106 sind, beispielsweise weil sie so brüchig sind, dass sie von den Kanten des Blechpaketes 104 ferngehalten werden müssen, wird beispielsweise ein quellendes Füllmaterial 17, das thermisch gut leitfähig ist und keine Wirbelströme zulässt, in die Nuten 106 eingebracht. Dieses umgibt die Leiterbündel 8 in den Nuten 106 und wird entweder auf die Leiterbündel 8 aufgetragen oder nach dem Einbringen der Leiterbündel 8 in die Nuten 106 eingespritzt. Das Füllmaterial wird beispielsweise derart gewählt, dass es sich nach dem Einbringen in die Nuten 106 von selbst oder durch Einblasen eines Gases oder durch Erhitzung ausdehnt. Alternativ oder zusätzlich wird in die Nuten 106 jeweils am Nutgrund ein nicht quellendes, thermisch gut leitendes und elektrisch isolierendes bzw. magnetisch verlustarmes festes Material eingeführt werden, z. B. wie in Figur 4 dargestellt ein verbackener oder verklebter segmentierter Elektroblechstab 18 oder alternativ ein Stab, der aus SMC gefertigt ist.

Ein Leiterbündel 8 wird automatisiert entweder vor, nach oder gemeinsam mit dem Profilstab 13 in eine Nut 106 eingeschoben oder es wird vor dem automatisierten Einschieben des Profilstabes 13 vom Luftspalt her in die Nut 106 eingesetzt, wobei in dem letzterem Fall der luftspaltseitige Öffnungsbereich der Nut 106 breit genug zum Einsetzen eines Leiterbündel 8 ausgelegt wird.

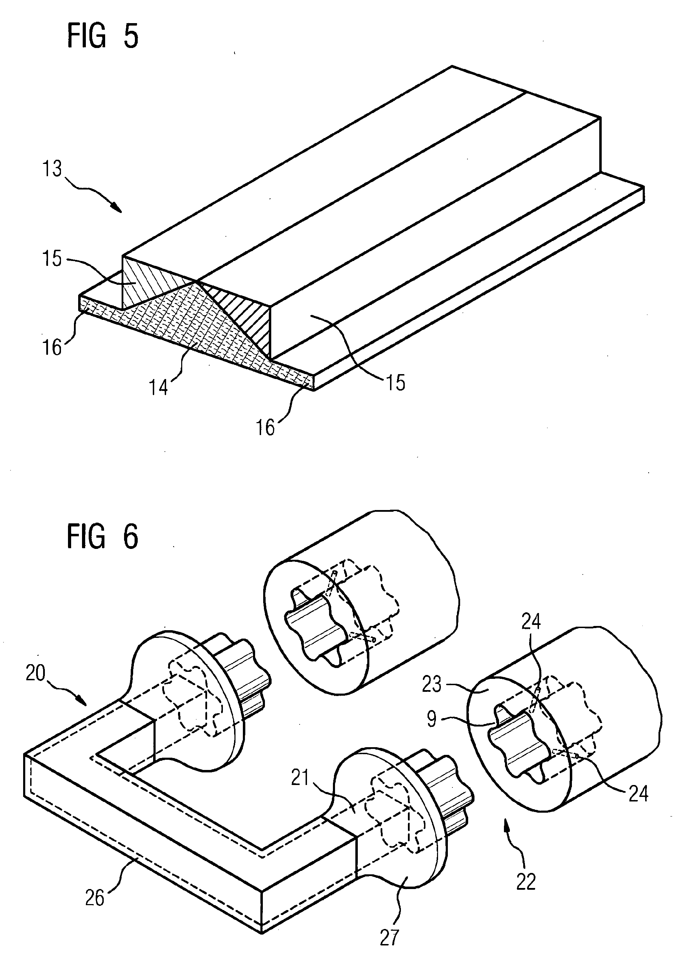

Figur 5 zeigt ein alternatives Ausführungsbeispiel eines Profilstabes 13, bei dem die Seitenkörper 15 statt eines rautenförmigen Querschnitts jeweils einen dreieckigen Querschnitt aufweisen, so dass auch der Querschnitt des Profilstabes 13 T-förmig ist.

Nach dem Einbringen der Leiterbündel 8 und Profilstäbe 13 in die Nuten 106 werden die aus den Isolationshohlkörperstapeln bzw. Isolationshohlkörperblöcken 12 herausragenden Leiterenden 9 an beiden axialen Blechpaketenden des Blechpaketes 104 automatisiert durch jeweils einen Wickelkopf 20 zu Spulen der Wicklung 102 verbunden. Der Wickelkopf 20 umfasst gebogene Verbindungsleiter 21, die jeweils zwei Leiterenden 9 der Leiterbündel 8 miteinander verbinden. Dabei sind die Leiterenden 9 der Leiterbündel 8 mit den Verbindungsleitern 21 verlötet.

Figur 6 zeigt eine perspektivische Darstellung eines Verbindungsleiters eines Wickelkopfes, der mittels einer Steckverbindung 22 mit einem Leiterende 9 eines Leiterbündels 8 verbunden wird. Dazu weisen der Verbindungsleiter 21 und das Leiterende 9 jeweils zueinander korrespondierende Endbereiche auf, so dass der Verbindungsleiter 21 an das Leiterende 9 gesteckt werden kann. Nach dem Anstecken des Verbindungsleiters 21 werden der Verbindungsleiter 21 und das Leiterende 9 miteinander verlötet. Dazu werden Steckverbinderformen 23 verwendet, die Lötöffnungen 24 zum Einführen von Lötspitzen aufweisen.

Der Wickelkopf 20 wird mit einer Wickelkopfisolation 26 aus einem elektrisch isolierenden Material isoliert. Dazu wird er entweder nach dem Verbinden des Verbindungsleiters 21 mit dem Leiterende 9 mittels eines Komplettvergusses isoliert oder die Verbindungsleiter 21 werden vorher, beispielsweise mit Keramik und Stützelementen, isoliert. Über einem Endbereich des Verbindungsleiters 21 weist die Wickelkopfisolation 26 beispielsweise eine trichterförmige Steckmuffe 27 zur Isolation des Verbindungsbereiches des Verbindungsleiters 21 und des Leiterendes 9 auf.

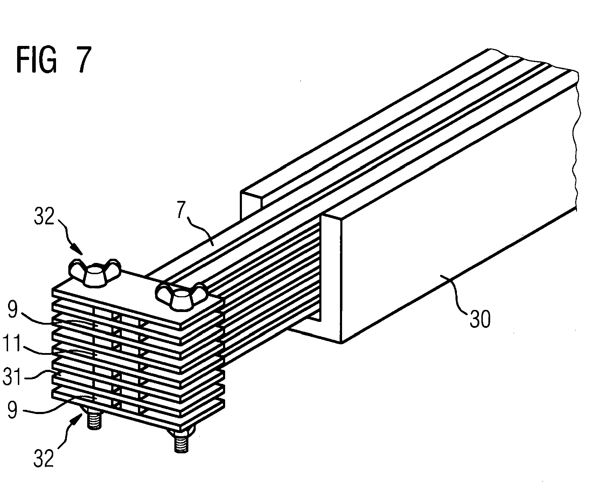

Die Figuren 7 bis 21 zeigen ein zweites Ausführungsbeispiel eines Stators 100 einer rotierenden elektrischen Maschine und ein Verfahren zu einer automatisierten Herstellung einer Wicklung 102 des Stators 100. Dieses Ausführungsbeispiel unterscheidet sich von dem anhand der Figuren 1 bis 6 beschriebenen ersten Ausführungsbeispiel vor allem durch die Herstellung der Leiterbündel 8 und des Wickelkopfes 20.

Die Figuren 7 und 8 zeigen die Herstellung eines Leiterbündels 8. Figur 9 zeigt ein hergestelltes Leiterbündel 8. Zur Herstellung eines Leiterbündels 8 werden zunächst die Leiter 1 bis 6, A bis F als gerade Leiterstäbe 7, beispielsweise aus Aluminium oder Kupfer, gefertigt, die länger als eine Nut 106 sind. Die Leiterstäbe 7 werden in eine Füllform 30, die dieselbe Länge wie eine Nut 106 hat, eingebracht, wobei die Leiterenden 9 der Leiterstäbe 7 beidseitig aus der Füllform 30 herausragen und, bedarfsweise zusammen mit einer Trennschicht 11 und/oder wenigstens einem Kühlkanal, schichtweise zwischen Abstandshaltern 31 gestapelt und optional mittels einer Verspannvorrichtung 32 verspannt werden (s. Figur 7). Die Füllform 30 wird oben mittels eines Füllformdeckels 33 und an den Enden mittels eines Abdichtschiebers 34, der Abdichtlamellen 35 zum Abdichten der Zwischenräume zwischen den Schichten der Leiterstäbe 7 aufweist, abgedichtet und durch eine Einfüllöffnung 36 in dem Füllformdeckel 33 mit elektrisch isolierenden Isolationsmaterial, bevorzugt mit einem keramischen Material, befüllt (s. Figur 8). Nach dem Aushärten des Isolationsmaterials und dem Entfernen des Füllformdeckels 33, Abdichtschiebers 34, der Verspannvorrichtung 32, Abstandshalter 31 und Füllform 30 verbleibt ein Leiterbündel 8 mit einem Isolationshohlkörperblock 12, aus dem beidseitig die Leiterenden 9 der Leiterstäbe 7 herausragen (s. Figur 9).

Die Leiterbündel 8 werden wie in dem ersten Ausführungsbeispiel in die Nuten 106 des Blechpaketes 104 eingebracht und dort, insbesondere mittels Profilstäben 13,k fixiert, vgl. die Figuren 2 bis 5 und deren Beschreibung.

Die Figuren 10 bis 20 zeigen ein Verfahren und eine Vorrichtung zur automatisierten Herstellung von Wickelköpfen 20 mittels einer Robotik. Beispielhaft wird im Folgenden die Herstellung von Wickelköpfen 20 beschrieben, die Leiterenden 9 von Leitern A bis F einer Unterschicht US eines ersten Leiterbündels 8 mit Leiterenden 9 von Leitern 1 bis 6 einer Oberschicht OS eines zweiten Leiterbündels 8 miteinander verbinden. Dabei werden die Leiterenden 9 verbogen und zur Bildung der Wickelköpfe 20 miteinander verlötet. Voraussetzung für diese Herstellung von Wickelköpfen 20 ist, dass die Leiterbündel 8 derart gefertigt werden, dass die Leiterenden 9 weit genug aus den Isolationshohlkörperblöcken 12 und damit aus den Nuten 106 herausragen, dass ihr Verbiegen und Verlöten möglich ist.

Die Figuren 10 bis 12 zeigen eine Vorrichtung zum Verbiegen und Verlöten der Leiterenden 9. Die Vorrichtung umfasst zwei Verbiegeeinheiten 40, 41, die jeweils mehrere Führungsschienen 42, Führungsarme 43 und Verbiegeköpfe 44, aufweisen, sowie eine Verlöteinheit 46.

Jeder Verbiegekopf 44 ist dabei an einem Führungsarm 43 befestigt, der in einer gebogenen Führungsschiene 42 geführt wird, und weist Führungsöffnungen 45 auf, durch die Leiter 1 bis 6, A bis F führbar sind und die auf die Abmessungen der Querschnitte der Leiter 1 bis 6, A bis F eingestellt werden, so dass durch sie geführte Leiter 1 bis 6, A bis F in ihnen verklemmt werden. Die Führungsschienen 42 und Führungsarme 43 sind derart ausgelegt, dass durch die Führungsöffnungen 45 der Verbiegeköpfe 44 einer Verbiegeeinheit 40, 41 geführte Leiter 1 bis 6, A bis F durch Verfahren der Führungsarme 43 dieser Verbiegeeinheit 40, 41 verbogen werden können.

Zur Herstellung eines Wickelkopfes 20 werden mittels einer ersten Verbiegeeinheit 40 gleichzeitig alle Leiter A bis F einer Unterschicht US eines ersten Leiterbündels 8 und mittels der zweiten Verbiegeeinheit 41 alle Leiter 1 bis 6 einer Oberschicht OS eines zweiten Leiterbündels 8 verbogen, so dass die Leiterenden 9 aller dieser Leiter 1 bis 6, A bis F bei der Verlöteinheit 46 zusammentreffen. Mittels der Verlöteinheit 46 werden dann jeweils zwei zu verbindende Leiterenden 9 verlötet.

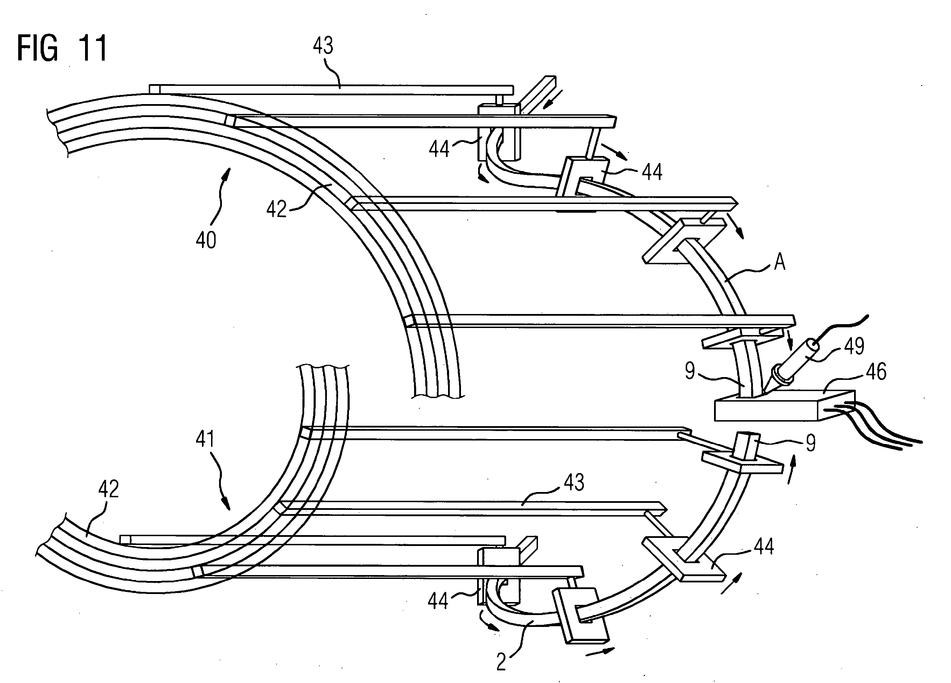

Dies wird in Figur 11 beispielhaft und schematisch für einen Leiter A einer Unterschicht US eines ersten Leiterbündels 8 und einen Leiter 2 einer Oberschicht OS eines zweiten Leiterbündels 8 illustriert.

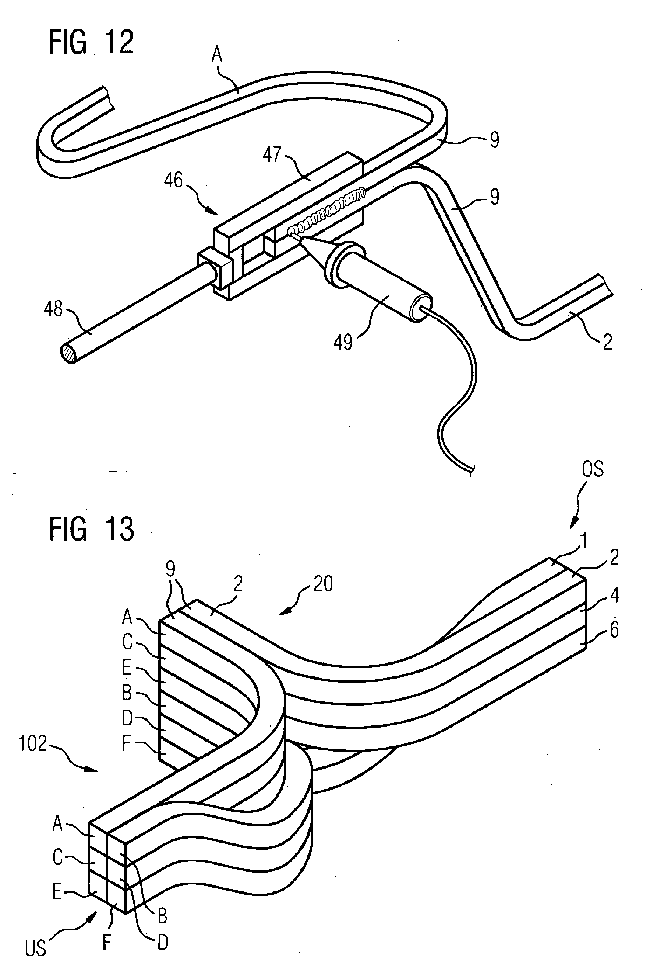

Figur 12 zeigt schematisch die Verlöteinheit 46. Die Verlöteinheit 46 umfasst wenigstens eine an einem Greiferzangenarm 48 angeordnete Greiferzange 47 und wenigstens einen Lötroboterarm 49. Mittels der wenigstens einen Greiferzange 47 werden je zwei zu verbindende Leiterenden 9 an zwei Längsseiten zusammengehalten und mittels des Lötroboterarms 49 miteinander verlötet. Dies ist in Figur 12 wiederum beispielhaft und schematisch für einen Leiter A einer Oberschicht OS einer Unterschicht US eines ersten Leiterbündels 8 und einen Leiter 2 einer Oberschicht OS eines zweiten Leiterbündels 8 illustriert.

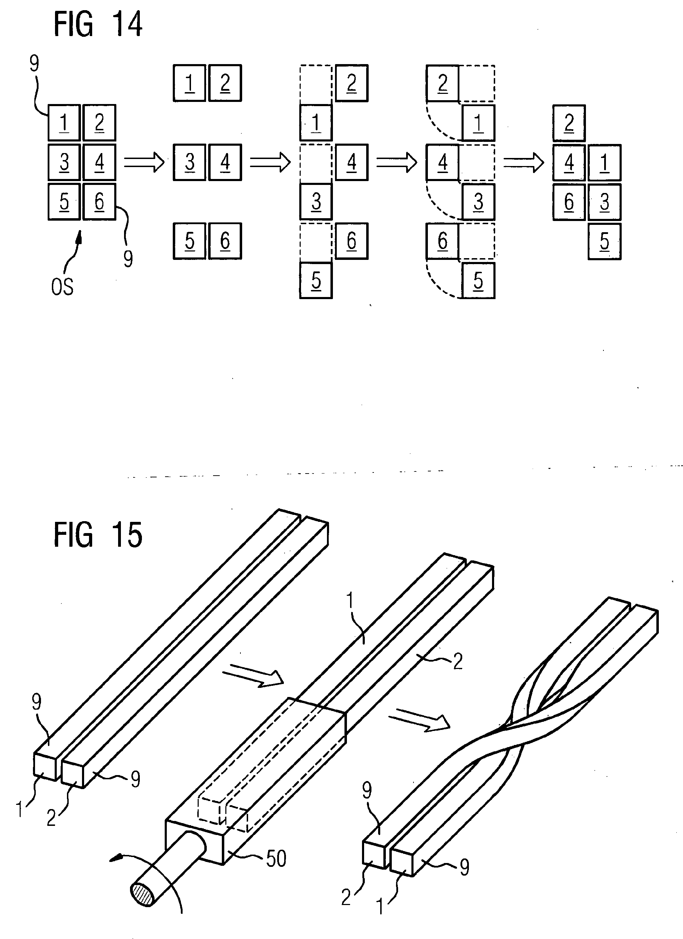

Figur 13 zeigt die Wicklung 102 im Bereich eines ersten Wickelkopfes 20 auf einer "Nicht-Schältseite" der Wicklung 102. Nebeneinander angeordnete Leiterenden 9 jeweils eines Leiters 1 bis 6 einer Oberschicht OS und eines Leiters A bis F einer Unterschicht US sind miteinander verlötet. Dazu werden Leiterenden 9 der der Verlöteinheit 46 zugeführten Leiter 1 bis 6, A bis F zunächst gegeneinander verdrillt und umgebogen, so dass miteinander zu verbindende Leiterenden 9 nebeneinander angeordnet sind, siehe dazu auch die Figuren 14 bis 18.

Die Figuren 14 bis 19 illustrieren die Herstellung der Wicklung 102 im Bereich des zweiten Wickelkopfes 20 auf einer "Schaltseite" der Wicklung 102. Auch dabei werden Leiterenden 9 der Leiter 1 bis 6, A bis F zunächst verdrillt und umgebogen, so dass miteinander zu verbindende Leiterenden 9 nebeneinander angeordnet sind.

Figur 14 zeigt beispielhaft die Verdrillung der Leiterenden 9 der Leiter 1 bis 6 einer Oberschicht OS. Dabei werden zunächst Schichten nebeneinander liegender Leiterenden 9 aufgefächert, so dass der Abstand zwischen den Schichten vergrößert wird. Dann werden Leiterenden 9 der einzelnen Schichten paarweise gegeneinander verdrillt, indem zunächst ein erstes Leiterende 9 eines Paares benachbarter Leiterenden 9 in eine erste Richtung gebogen wird und anschließend das erste Leiterende 9 des Paares in eine zu der ersten Richtung orthogonalen zweiten Richtung und das zweite Leiterende 9 des Paares in die entgegen gesetzte Richtung gebogen wird, so dass das zweite Leiterende 9 die Position des ersten Leiterendes 9 vor der Verdrillung einnimmt. Schließlich werden die Leiterenden 9 zusammengeschoben, so dass die Leiterenden 9 der ursprünglichen Schichten gegeneinander versetzt sind.

Figur 15 zeigt schematisch eine Verdrilleinheit 50 zur Verdrillung von zwei Leiterenden 9. Die Verdrilleinheit nimmt die beiden Leiterenden 9 auf, dreht sich um eine zu den Längsachsen der Leiterenden 9 parallele Drehachse und gibt die Leiterenden 9 anschließend wieder frei.

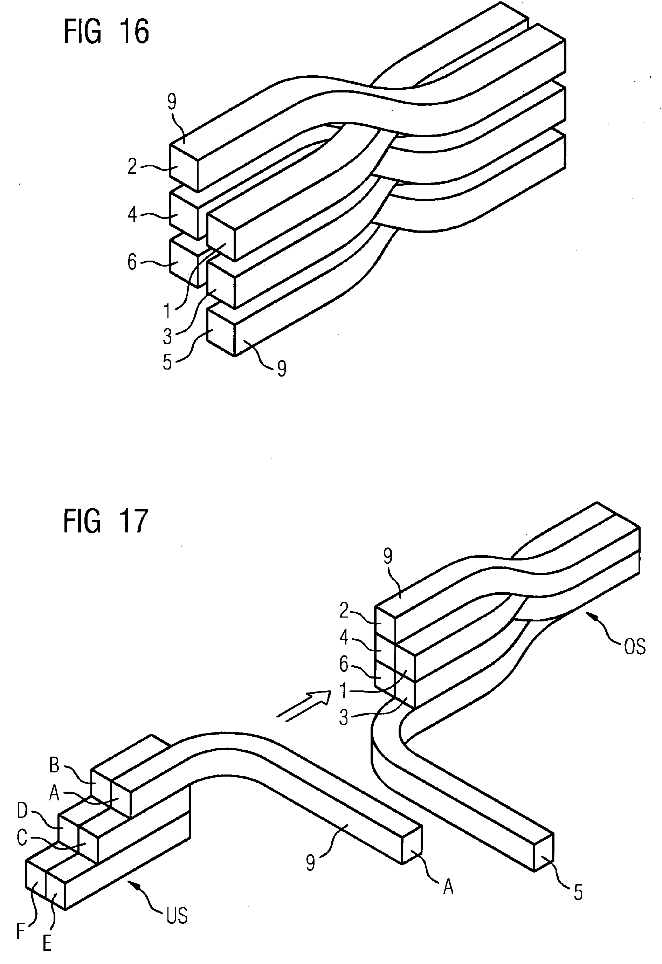

Die Figuren 16 und 17 zeigen das Ergebnis der anhand der Figuren 14 und 15 beschriebenen Verdrillung der Leiterenden 9 der Oberschicht OS auf der Schaltseite der Wicklung 102.

Nach der Verdrillung werden die Leiterenden 9 umgebogen, so dass miteinander zu verbindende Leiterenden 9 nebeneinander angeordnet sind. Nebeneinander angeordnete Leiterenden 9 jeweils eines Leiters 1 bis 6 einer Oberschicht OS und eines Leiters A bis F einer Unterschicht US werden miteinander verlötet. Jeweils ein Leiterende 9 der Oberschicht OS und ein Leiterende 9 der Unterschicht US auf der Schaltseite der Wicklung 102 wird als elektrische Zuleitung zu der aus den Leitern 1 bis 6 der Oberschicht OS und den Leitern A bis F der Unterschicht US gebildeten Spule verwendet und deshalb mit keinem anderen Leiterende 9 verbunden.

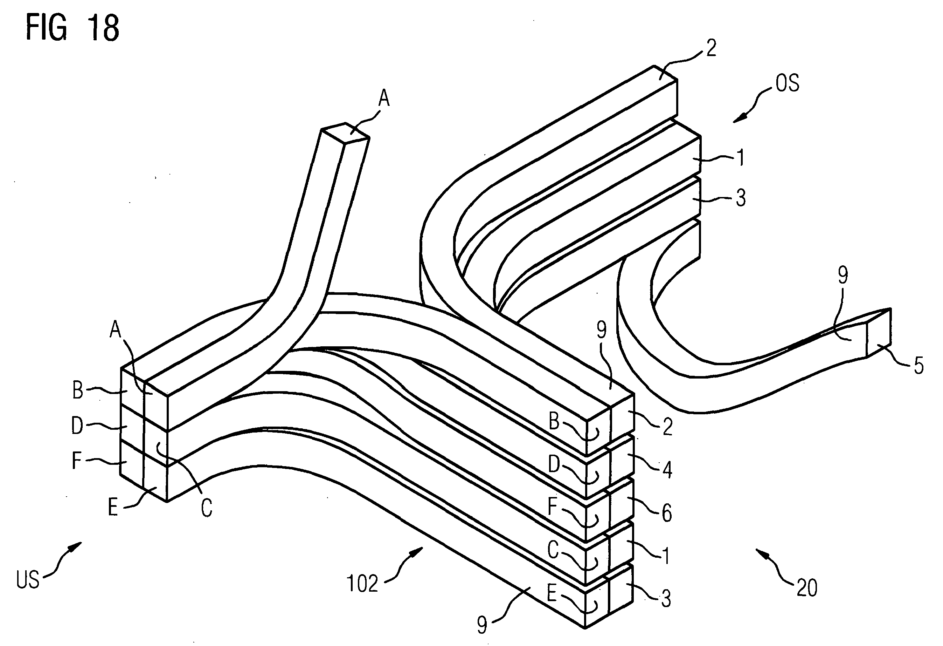

Figur 18 zeigt die Wicklung 102 im Bereich des Wickelkopfes 20 an der Schaltseite der Wicklung 102.

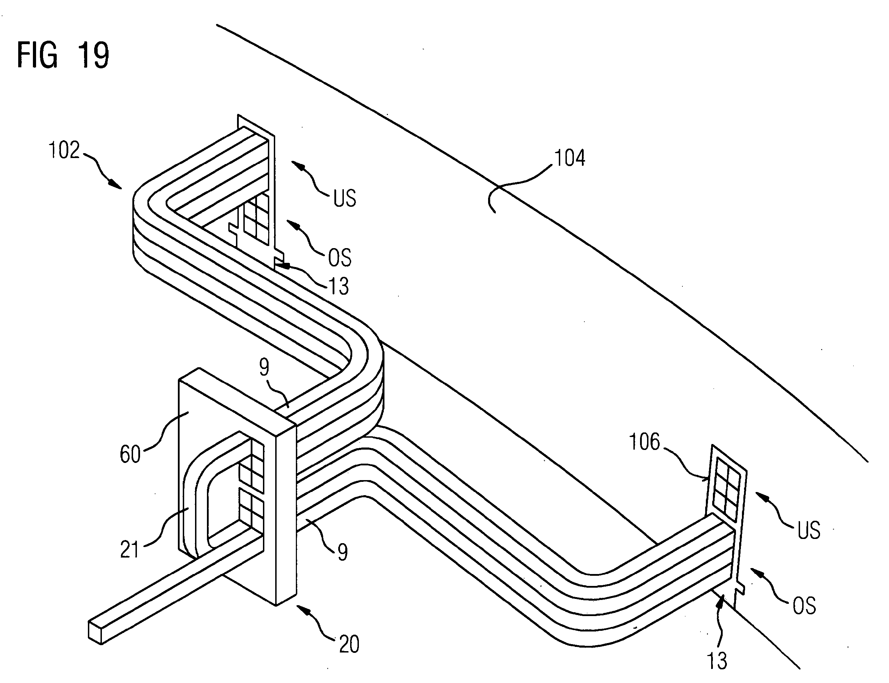

Figur 19 zeigt eine Alternative zu dem anhand der Figuren 12 bis 18 beschriebenen Verfahren zur Verbindung von Leiterenden 9 zu Wickelköpfen 20. Bei diesem alternativen Verfahren werden die Leiterenden 9 nicht miteinander verlötet, sondern zu einer Verschaltungseinheit 60 hin gebogen und dort mittels Verbindungsleitern 21 paarweise miteinander elektrisch geschaltet.

Eine Alternative zu den anhand der Figuren 10 bis 19 beschriebenen Verfahren zur automatisierten Verbindung der Leiter 1 bis 6, A bis F der Leiterbündel 8 durch Wickelköpfe 20 sieht vor, Wickelkopfenden separat herzustellen und jeweils mit Leiterenden 9 zu verbinden. Bei dieser Alternative ragen die Leiterenden 9 weniger aus den Isolationshohlkörperblöcken 12 und Nuten 106 heraus als bei den anhand der Figuren 10 bis 19 beschriebenen Verfahren, da sie nicht zu Wickelköpfen 20 zusammengebogen werden. Stattdessen sieht das alternative Verfahren vor, die Leiterenden 9 zuzuschneiden, zu bündeln, zurechtzubiegen und auszuformen, und die vorgefertigten Wickelkopfenden mittels je einer Vorrichtung an jedem axialen Ende des Blechpaketes 104 automatisiert über die Leiterenden 9 der Leiterbündel 8 zu schieben und mit den Leiterenden 9 zu verbinden, beispielsweise mittels Kaltverpressung oder Schwalllötung.

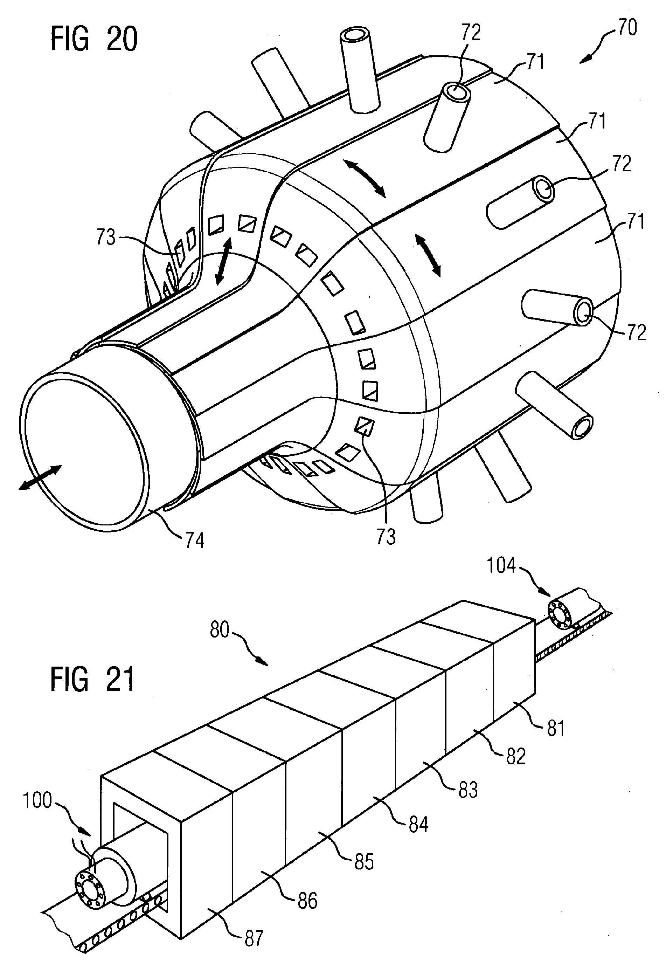

Figur 20 zeigt eine Vergießeinheit 70 zum automatisierten Isolieren eines Wickelkopfes 20 nach der Fertigstellung der Wicklung 102. Die Vergießeinheit 70 hat die Form eines Trichters zur Aufnahme eines Wickelkopfes 20. Der Trichter weist mehrere axial verlaufende Trichtersegmente 71 auf, die durch gegenseitige Drehungen um eine Längachse der Vergießeinheit 70 übereinander verschiebbar sind, so dass sich der Durchmesser des Trichters dem Durchmesser des Wickelkopfes 20 anpassen lässt. Die Trichtersegmente 71 weisen jeweils eine Vergießzuleitung 72 auf, durch die Trichter mit einem Isolationsmaterial zum Isolieren des Wickelkopfes 20 befüllbar ist. Ferner weisen die Trichtersegmente 71 Trichtersegmentöffnungen 73 für Kühlkanäle und/oder eine Führung des Trichters auf. An einem axialen Ende weist die Vergießeinheit 70 eine Endabdichtung 74 auf, die in axialer Richtung verschiebbar ist, so dass ihre Position der axialen Ausdehnung des Wickelkopfes 20 anpassbar ist.

Figur 21 zeigt eine Maschinenstraße 80 zur vollständig automatisierten Herstellung einer Wicklung 102 eines Stators 100. Der Maschinenstraße 80 werden Blechpakete 104 zugeführt. In der Maschinenstraße 80 werden die Blechpakete 104 jeweils mit einer Wicklung 102 versehen. Am Ende der Maschinenstraße 80 werden Statoren 100 ausgegeben.

Die Maschinenstraße 80 weist mehrere Maschinenstraßenabschnitte 81 bis 87 auf, in denen jeweils einer der anhand der Figuren 7 bis 20 beschriebenen Arbeitsgänge ausgeführt wird. In einem ersten Maschinenstraßenabschnitt 81 werden Leiterstäbe 7 zurechtgeschnitten. In einem zweiten Maschinenstraßenabschnitt 82 werden die Leiterstäbe 7 wie anhand von Figur 7 beschrieben gestapelt und in Füllformen 30 eingelegt. In einem dritten Maschinenstraßenabschnitt 83 werden die Füllformen 30 wie anhand von Figur 8 beschrieben mit Isolationsmaterial befüllt und dabei Leiterbündel 8 mit Isolationshohlkörperblöcken 12 hergestellt. In einem vierten Maschinenstraßenabschnitt 84 werden die Leiterbündel 8 wie anhand der Figuren 2 bis 4 beschrieben jeweils in eine Nut 106 des Blechpaketes 104 eingebracht und dort fixiert. In einem fünften Maschinenstraßenabschnitt 85 werden die Wicklungen 102 im Bereich der Wickelköpfe 20 wie anhand der Figuren 10 und 11 beschrieben durch Verbiegen der aus den Nuten 106 herausragenden Leiterenden 9 geformt. In einem sechsten Maschinenstraßenabschnitt 86 werden Leiterenden 9 wie anhand der Figuren 12 bis 18 oder alternativ der Figur 19 beschrieben zu Wickelköpfen 20 elektrisch verbunden. In einem siebten Maschinenstraßenabschnitt 87 werden die Wickelköpfe 20 wie anhand von Figur 20 beschrieben elektrisch isoliert.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, wie er durch die beigefügten Patentansprüche festgelegt wird.

## Patentansprüche

1. Verfahren zur automatisierten Herstellung einer Wicklung (102) eines Stators (100) einer rotierenden elektrischen Maschine, wobei die Wicklung (102) aus mehreren Spulen besteht und der Stator (100) ein Blechpaket (104) mit Nuten (106) aufweist, durch die Windungen der Spulen der Wicklung (102) verlaufen, wobei
- mehrere Leiterbündel (8) gerader, zueinander paralleler und elektrisch voneinander isolierter Leiter (1 bis 6, A bis F), die jeweils länger als eine Nut (106) sind, hergestellt werden, wobei die Leiter (1 bis 6, A bis F) eines Leiterbündels (8) in dem gesamten Bereich, der in eine Nut (106) eingebracht wird, mit einem keramischen Material voneinander und zum Blechpaket (104) elektrisch isoliert werden,
- jedes Leiterbündel (8) in eine Nut (106) des Stators (100) eingebracht wird, so dass beide Leiterenden (9) jedes Leiters (1 bis 6, A bis F) aus der Nut (106) herausragen,
- und Leiterenden (9) der Leiter (1 bis 6, A bis F) an beiden axialen Blechpaketenden des Blechpaketes (104) durch jeweils einen Wickelkopf (20) zu Spulen der Wicklung (102) elektrisch verbunden werden,
- wobei zur Herstellung eines Leiterbündels (8)
- entweder für jeden Leiter (1 bis 6, A bis F) ein Isolationshohlkörper (10) oder ein Isolationshohlkörperblock (12) mit Durchlöchern für die Leiter (1 bis 6, A bis F) hergestellt und zur Erzeugung der Leiter (1 bis 6, A bis F) mit einem elektrisch leitfähigen Material homogen und ohne Lufteinschlüsse ausgegossen wird,
- oder Leiterstäbe (7), die länger als eine Nut (106) sind, hergestellt werden, voneinander beabstandet in eine Füllform (30), die dieselbe Länge wie eine Nut (106) hat, eingebracht werden, so dass die Leiterenden (9) der Leiterstäbe (7) beidseitig aus der Füllform (30) herausragen, und die Füllform (30) zur elektrischen Isolierung der Leiterstäbe (7) mit einem elektrisch isolierenden Isolationsmaterial befüllt und nach dem Aushärten des Isolationsmaterials entfernt wird.

2. Verfahren nach Anspruch 1,
**dadurch gekennzeichnet, dass** jede Nut (106) luftspaltseitig mit einem Profilstab (13) verschlossen wird.

3. Verfahren nach einem der Ansprüche 1 oder 2,
**dadurch gekennzeichnet, dass** zur Herstellung eines Wickelkopfes (20) jeweils zwei Leiterenden (9) mit einem Verbindungsleiter (21) verlötet werden.

4. Verfahren nach Anspruch 3,
**dadurch gekennzeichnet, dass** jeder Verbindungsleiter (21) mit zwei Leiterenden (9) vor dem Verlöten über eine Steckverbindung (22) verbunden wird.

5. Verfahren nach einem der Ansprüche 1 oder 2,
**dadurch gekennzeichnet, dass** zur Herstellung eines Wickelkopfes (20) jeweils zwei aus verschiedenen Nuten (106) herausragende Leiterenden (9) zueinander gebogen und danach elektrisch miteinander verbunden werden.

6. Verfahren nach einem der Ansprüche 3 bis 5,
**dadurch gekennzeichnet, dass** die Wicklung (102) im Bereich des Wickelkopfes (20) mit einem Isolationsmaterial vergossen wird.

7. Verfahren nach Anspruch 2,
**dadurch gekennzeichnet, dass** jeder Profilstab (13) aus einem Grundkörper (14) aus Glasfaser mit einem Überzug aus einem magnetisch leitfähigen und elektrisch isolierenden Material besteht.

8. Verfahren nach Anspruch 7,
**dadurch gekennzeichnet, dass** der Überzug aus einem Soft Magnetic Composite besteht.

9. Verfahren nach Anspruch 7 oder 8,
**dadurch gekennzeichnet, dass** der Grundkörper (14) die Form eines geraden Prismas mit einer dreieckigen Grundfläche hat, von dem an zwei zu der Grundfläche orthogonalen Kanten je ein Flansch (16) absteht, so dass der Grundkörper (14) einen T-förmigen Querschnitt mit von den Flanschen (16) gebildeten Armen und einem dreieckigen Fuß aufweist.

10. Verfahren nach Anspruch 9,
**dadurch gekennzeichnet, dass** der Überzug die Form zweier Seitenkörper (15) hat, die jeweils einen rautenförmigen Querschnitt haben und an einer Flanschoberfläche eines Flansches (16) und einer sich daran anschließenden Prismaseitenfläche des Grundkörpers (14) anliegen.

11. Stator (100) einer rotierenden elektrischen Maschine, der Stator (100) umfassend
- ein Blechpaket (104) mit mehreren zu einem Luftspalt zwischen dem Stator (100) und einem Rotor der elektrischen Maschine offenen Nuten (106)
- und eine Wicklung (102) mit mehreren Spulen, deren Windungen jeweils durch Nuten (106) des Blechpaketes (104) verlaufen,
- wobei die Windungen der Spulen innerhalb der Nuten (106) durch ein keramisches Material voneinander und zum Bleckpaket (104) elektrisch isoliert sind,
- und wobei die Wicklung (102) mit einem Verfahren gemäß einem der vorhergehenden Ansprüche hergestellt ist.

## Claims

1. Method for the automated production of a winding (102) of a stator (100) of a rotary electric machine, wherein the winding (102) consists of a plurality of coils and the stator (100) has a laminated stack (104) with grooves (106), through which turns of the coils of the winding (102) run, wherein
- a plurality of conductor bundles (8) of conductors (1 to 6, A to F) which are straight, parallel to one another and electrically insulated from one another and which are each longer than a groove (106) are produced, wherein the conductors (1 to 6, A to F) of a conductor bundle (8) are electrically isolated from one another and from the laminated stack (104) by a ceramic material in the whole region which is introduced into a groove (106),
- each conductor bundle (8) is introduced into a groove (106) of the stator (100), so that both conductor ends (9) of each conductor (1 to 6, A to F) project out of the groove (106),
- and conductor ends (9) of the conductors (1 to 6, A to F) are electrically connected to coils of the winding (102) at both axial laminated stack ends of the laminated stack (104) by a winding overhang (20) in each case,
- wherein to produce a conductor bundle (8)
- either an insulating hollow body (10) or an insulating hollow body block (12) with through-holes for the conductors (1 to 6, A to F) is produced for each conductor (1 to 6, A to F) and is cast homogeneously and without air bubbles for the fabrication of the conductors (1 to 6, A to F) using an electrically conductive material,
- or conductor bars (7) which are longer than a groove (106) are produced, and are introduced spaced apart from one another into a blank mould (30) which has the same length as a groove (106), so that the conductor ends (9) of the conductor bars (7) project out of the blank mould (30) on both sides, and for the electrical insulation of the conductor bars (7) the blank mould (30) is filled with an electrically insulating material and is removed after the insulation material has hardened.

2. Method according to claim 1,
**characterised in that** each groove (106) is closed with a profile bar (13) on the air gap side.

3. Method according to one of claims 1 or 2,
**characterised in that** to produce a winding overhang (20) in each case two conductor ends (9) are soldered to a connection conductor (21).

4. Method according to claim 3,
**characterised in that** each connection conductor (21) is connected to two conductor ends (9) via a plug-in connection (22) prior to the soldering.

5. Method according to one of claims 1 or 2,
**characterised in that** to produce a winding overhang (20) in each case two conductor ends (9) projecting out of different grooves (106) are bent towards one another and are then electrically connected to one another.

6. Method according to one of claims 3 to 5,
**characterised in that** the winding (102) is cast using an insulating material in the region of the winding overhang (20).

7. Method according to claim 2,
**characterised in that** each profile bar (13) consists of a base body (14) made of fibreglass with an overlay made of a magnetically conductive and electrically insulating material.

8. Method according to claim 7,
**characterised in that** the overlay consists of a soft magnetic composite.

9. Method according to claim 7 or 8,
**characterised in that** the base body (14) has the shape of a straight prism with a triangular base area, from which on two of the edges orthogonal to the base area a flange (16) sticks out in each case, so that the base area (14) has a T-shaped cross-section with arms formed by the flanges (16), and a triangular foot.

10. Method according to claim 9,
**characterised in that** the overlay has the form of two lateral bodies (15) which each have a lozenge-shaped cross-section and rest on a flange surface of a flange (16) and a prism lateral surface of the base body (14) adjoining it.

11. Stator (100) of a rotary electric machine, the stator (100) comprising
- a laminated stack (104) having a plurality of grooves (106) open to an air gap between the stator (100) and a rotor of the electric machine
- and a winding (102) having a plurality of coils, the turns of which each run through grooves (106) of the laminated stack (104),
- wherein the windings of the coils are electrically insulated from one another within the grooves (106) by a ceramic material and are electrically insulated from the laminated stack (104),
- and wherein the winding (102) is produced using a method according to one of the preceding claims.

## Revendications

1. Procédé de fabrication automatisé d'un enroulement ( 102 ) d'un stator ( 100 ) d'une machine électrique tournante, l'enroulement ( 102 ) étant constitué de plusieurs bobines et le stator ( 100 ) ayant un paquet ( 104 ) de tôles ayant des encoches ( 106 ) dans lesquelles passent des spires des bobines de l'enroulement ( 102 ), dans lequel
- on fabrique plusieurs faisceaux ( 8 ) de conducteurs ( 1 à 6, A à F ) rectilignes parallèles entre eux et isolés les uns des autres électriquement qui sont respectivement plus longs qu'une encoche ( 106 ), les conducteurs ( 1 à 6, A à F ) d'un faisceau ( 8 ) de conducteurs étant, dans la partie commune qui est mise dans une encoche ( 106 ), isolés électriquement les uns des autres et par rapport au paquet ( 104 ) de tôles par un matériau céramique,
- on met chaque faisceau ( 8 ) de conducteurs dans une encoche ( 106 ) du stator ( 100 ) de manière à ce que les deux extrémités ( 9 ) de chaque conducteur ( 1 à 6, A à F ) sortent de l'encoche ( 106 ),
- et on relie électriquement en des bobines de l'enroulement ( 102 ) des extrémités ( 9 ) des conducteurs ( 1 à 6, A à F ) aux deux extrémités axiales du paquet ( 104 ) de tôles par respectivement une tête ( 20 ) d'enroulement,
- dans lequel pour la fabrication d'un faisceau ( 8 ) de conducteurs,
- ou bien on fabrique pour chaque conducteur ( 1 à 6, A à F ) un corps ( 10 ) creux isolant ou un bloc ( 12 ) de corps creux isolant ayant des trous traversant pour les conducteurs ( 1 à 6, A à F ) et pour la production des conducteurs ( 1 à 6, A à F ), on applique aux conducteurs ( 1 à 6, A à F ) par coulée, d'une manière homogène et sans inclusion d'air, un matériau conducteur de l'électricité,
- ou bien on fabrique des barreaux ( 7 ) conducteurs, qui sont plus longs qu'une encoche ( 106 ), on les met à distance les uns des autres dans un moule ( 30 ) de remplissage, qui a la même longueur qu'une encoche ( 106 ) de manière à ce que les extrémités ( 9 ) conductrices des barreaux ( 7 ) conducteurs sortent des deux côtés du moule ( 30 ) de remplissage et on remplit le moule ( 30 ) de remplissage, pour isoler électriquement les barreaux ( 7 ) conducteurs, d'une matière isolante du point de vue électrique et on retire le moule après le durcissement de la matière isolante.

2. Procédé suivant la revendication 1,
**caractérisé en ce que** l'on ferme chaque encoche ( 106 ) du côté de l'entrefer par un barreau ( 13 ) profilé.

3. Procédé suivant l'une des revendications 1 ou 2, **caractérisé en ce que**, pour la fabrication d'une tête ( 20 ) d'enroulement, on brase respectivement deux extrémités ( 9 ) de conducteurs par un conducteur ( 21 ) de liaison.

4. Procédé suivant la revendication 3,
**caractérisé en ce qu'**on relie, par un assemblage ( 22 ) par enfichage, avant le brasage chaque conducteur ( 21 ) de liaison à deux extrémités ( 9 ) de conducteurs.

5. Procédé suivant la revendication 1 ou 2,
**caractérisé en ce que**, pour la fabrication d'une tête ( 20 ) d'enroulement, on courbe l'une vers l'autre respectivement deux extrémités ( 9 ) de conducteurs sortant d'encoches
( 106 ) différentes et ensuite on les relie entre elles électriquement.

6. Procédé suivant l'une des revendications 3 à 5,
**caractérisé en ce que** l'on coule une matière isolante sur l'enroulement ( 102 ) dans la région de la tête de l'enroulement.

7. Procédé suivant la revendication 2,
**caractérisé en ce que** chaque barreau ( 13 ) profilé est constitué d'un corps ( 14 ) de base en fibre de verre ayant un revêtement en une matière conductrice magnétiquement et isolante électriquement.

8. Procédé suivant la revendication 7,
**caractérisé en ce que** le revêtement est constitué d'un composite magnétique doux.

9. Procédé suivant la revendication 7 ou 8,
**caractérisé en ce que** le corps ( 14 ) de base a la forme d'un prisme droit ayant une surface de base triangulaire, duquel partent sur deux arêtes orthogonales à la surface de base respectivement un rebord ( 16 ) de manière à ce que le corps ( 14 ) de base ait une section transversale en forme de T ayant des bras formés par les rebords ( 16 ) et un pied triangulaire.

10. Procédé suivant la revendication 9,
**caractérisé en ce que** le revêtement a la forme de deux corps ( 15 ) latéraux, qui ont respectivement une section transversale en forme de losange et qui s'appliquent à une surface d'un rebord ( 16 ) et à une surface latérale de prisme s'y raccordant du corps ( 14 ) de base.

11. Stator ( 100 ) d'une machine électrique tournante, le stator comprenant
- un paquet ( 104 ) de tôles ayant plusieurs encoches ( 106 ) ouvertes en un entrefer entre le stator ( 100 ) et un rotor de la machine électrique,
- et un enroulement ( 102 ) ayant plusieurs bobines dont les spires passent respectivement dans les encoches ( 106 ) du paquet ( 104 ) de tôles,
- les spires des bobines sont à l'intérieur des encoches ( 106 ) isolées électriquement les unes des autres et par rapport au paquet ( 104 ) de tôles par un matériau céramique,
- et dans lequel l'enroulement ( 102 ) est fabriqué par un procédé suivant l'une des revendications précédentes.
